Europäisches Patentamt

European Patent Office

Office européen des brevets

(11) Publication number: **0 291 246 B1**

(12) **EUROPEAN PATENT SPECIFICATION**

(45) Date of publication of patent specification: **03.08.94**

(51) Int. Cl.5: **H04L 25/22**, H04L 25/49, H04L 25/30

(21) Application number: **88304125.3**

(22) Date of filing: **06.05.88**

(54) **Method for converting signal levels, and device for carrying out the method.**

(30) Priority: **12.05.87 NO 871959**
**09.12.87 NO 875147**

(43) Date of publication of application:
**17.11.88 Bulletin 88/46**

(45) Publication of the grant of the patent:
**03.08.94 Bulletin 94/31**

(84) Designated Contracting States:
**AT BE CH DE ES FR GB GR IT LI LU NL SE**

(56) References cited:
**EP-A- 0 217 609**
**WO-A-81/02653**
**GB-A- 2 007 946**

**N.E.C. RESEARCH & DEVELOPMENT, no. 82,
July 1986, pages 83-95, Tokyo, JP; S. Koike et
al.: "Digital subscriber loop transmission
system for ISDN based on echo cancellation
technique"**

(73) Proprietor: **Ericsson AS**
**Postboks 34**
**N-1361 Billingstadsletta(NO)**

(72) Inventor: **Roste, Terje**
**Kvartsveien**
**N-3340 Amot(NO)**
Inventor: **Finnestad, Aksell**
**Dreggarmen 2**
**N-4056 Tanager(NO)**
Inventor: **Schumann-Olsen, Reidar**
**Notteeknekkeren 14**
**N-3400 Lier(NO)**

(74) Representative: **Barlow, Roy James et al**
**J.A. KEMP & CO.**
**14, South Square, Gray's Inn**
**London WC1R 5LX (GB)**

EP 0 291 246 B1

EP 0 291 246 B1

**Description**

FIELD OF THE INVENTION

The present invention relates to a method for converting a recoded line signal comprising a certain number of levels, to a signal comprising fewer levels.

More especially the invention relates to a method wherein by means of an adaptive cancellation circuit the signal levels in a three level basis band code are converted to a two level detection criterion.

Further, the invention relates to a device for carrying out the method.

PRIOR ART

In connection with the transmission of data on cables it is usual to utilize so-called base band codes. Within this group of codes there exist two different alternative encoding techniques. The simplest thereof comprise two level codes, wherein only two voltage levels are used on the line, i.e. the plus or the minus voltage between the conductors. The decoder for this two level code will therefore be simple, it only being necessary to compare the received signal in relation to zero volt in order to determine the polarity of the signal.

However, the attenuation of the cable will increase with increasing frequency, and in order to achieve a most extended range of the transmission, it is therefore usual to employ line codes having larger parts of the power consentrated at lower frequencies compared with what can be implemented in two level codes. In order to achieve this, the recoding of a sequence of binary signals ("0" and "1") to a line signal will involve the use of more than two signal levels. For example, three signal levels might be used, for example the plus voltage, zero and the minus voltage, and the code is then designated a three level code.

The simplest of the three level codes which are in use, is the so-called AMI code, wherein the binary "0" is coded as zero voltage, whereas the binary "1" is alternatingly coded as a plus or a minus voltage.

The application of three level codes will, however, increase the complexity of the decoder, since a comparison in relation to a fixed reference can no longer be employed. In principle, it is then necessary to compare in relation to two threshold values (V+ and V-) in order to decide whether the signal is positive, negative, or zero. These threshold values also depend on the level of the received signal, and they must thus be adjusted in dependence of the signal attenuation (cable lengths. This implies a complicating situation compared with two level codes, wherein comparison is always made in relation to the same value (zero volts).

The accommodation of the received signal and the threshold levels of a multiple level code is usually made adaptive, for example by using AGC (Automatic Gain Control), such that the level of the received signal is accommodated to fixed detection thresholds.

US-A-4528676 relates to an adaptive equalizer for removing interfering inter-symbolic interference which appears due to discontinuities in the transmission channels. Such discontinuities can be caused by terminated bridge taps, see especially Fig 1a-1d of this reference.

The reflected and delayed pulse which appears due to such discontinuities will disturb the detection of subsequent symbols. It is therefore desirable to suppress this pulse as much as possible. In US-A-4528676, this takes place in the equalizing network on the receiver side. Such equalizing networks are standard equipment in all digital transmission systems. Both fixed and self-adjusting solutions are known; the technique disclosed in US-A-4528676 belongs to the latter category.

SUMMARY OF THE INVENTION

It is an object of the present invention to convert a line signal comprising a certain number of levels to a signal comprising fewer levels, whilst simultaneously taking advantages of the various forms of signals in the transmission and decoding, respectively. More especially the object is to convert a three level signal to a two level detection criterion, for thereby achieving the same circuitry advantages as involved in detection of two level line codes.

One known method and apparatus for converting an AMI code to a two-level code is described in EP-A-0 217 609.

The line codes which exist in practice, are balanced, i.e. the average line signal over time is zero volt. Most of the codes also have a high degree of short time balance, i.e. the avarage line signal is approximately zero volt over time intervals of relatively short duration. Good properties as regards balance are equivalent to a minor signal power concentration at the far lowest frequencies. This is necessary inter

2

alia because the line transformer puts a limit on the signal transmission in the lowest frequency range.

During stationary conditions the balance requirement can mathematically be expressed in that the expected value of the line signal S(t) is zero for all t:

$$E \{ S(t) \} = 0.$$

(E is as usual the statistic expectancy operator).

Most of the multiple level codes are redundant, i.e. they can utilize a partial quantity of the theoretically possible line signals for information transmission.

For example, n three level signal elements would theoretically enable transmission of $3^n$ different messages, whereas the AMI code can only send $2^n$ different messages in this interval.

This redundancy is utilized consciously to improve the balance properties of the code (as regards AMI by alternatingly using the positive and negative voltages as previously discussed).

The utilization of the redundancy in order to achieve good balance properties necessarily involves that there exists a statistic correlation (co-variation) between signals which are close to each other in time. Let H designate the line signal's history up to the point of time t, and let s(t) be the next signal level. Expected value of s(t), given H, will then not generally be zero, but will depend on H:

$$E\{ s(t) \mid H\} \text{ different from zero in the general case.}$$

For example for AMI signals, if the last received one in the pre-history H were positive, then s(t) would have a negative expectancy, since the two possible values for s(t) in accordance with the code rules are zero volt and minus voltage.

For AMI and most of the other line codes this dependency will in its simplest form be expressed in that the expected value of the next signal level has the opposite sign to the previous:

$$E\{ s(t+1) \mid s(t)\} \text{ has opposite sign of s(t).}$$

In data transmission it is is well-known technique to use the knowledge of previous signals to improve the safety in the detection process (quantified feedback as described in the following).

However, in accordance with the present invention the knowledge of the previous history is utilized in a different manner, in that the statistic binding existing between approximate signal levels is utilized in an adaptive cancellation circuit which automatically adds a threshold value to the received signal. This threshold makes it possible to obtain information about the signal value by a comparison, in relation to zero volt, on the output of the cancellation circuit.

More specifically this is achieved by classifying sequences of the previous history in groups having the same sign of the expected value of the next line signal. If information about which group the received previous history is related to, is supplied to the cancellation circuit, the latter will try to compensate for the expected value, i.e. add a threshold which displaces the average signal level from the originally expected value down towards zero volt. Signals having values above the expected value will therefore at the output of the cancellation circuit become positive, whereas signals below the expected value will become negative.

The method of the present invention is characterised by the feature of claim 1.

The device of the invention is defined in claim 4.

The invention has found special application in connection with AMI signals, wherein the automatic level conversion taking place in the cancellation circuit corresponds to optimum detection threshold for this line code (the threshold giving the best noise immunity).

An AMI three level code comprising positive, negative and zero signals, will also on the receiver side be converted to a two level signal which is detected by means of a two level detector since, before the input to the detector, it is only sensed whether the signal from the output of the cancellation circuit is positive or negative.

In other words a three level AMI basis band code has here been brought down to a two level detection criterion, and then without any analog level regulation. This implies that the receiver side can be designed with simpler units, since possible circuits for level regulation (AGC) can be deleted.

Further features of the present method and a device for the execution thereof, will appear from the subsidiary claims.

BRIEF DESCRIPTION OF THE DRAWINGS

The invention will now be described further, with reference to the various Figures of the drawings illustrating examples of prior art and embodiments according to the invention.

Fig. 1 is a fraction of a line signal which is coded in accordance with an AMI code.

Fig. 1a is a schematic block diagram illustrating the principle of an AMI code.

Fig. 2 illustrates the threshold values of an AMI signal upon sampling in the bit intervals.

Fig. 3 is a simplified block diagram of a typical receiver for an AMI line code, wherein prior art detection technique is used.

Fig. 3a is a simplified diagram of a prior art three level detector.

Fig. 4 is a block diagram of an adaptive echo cancellation circuit.

Fig. 5 is a block diagram illustrating a preferred embodiment of the invention.

DETAILED DISCRIPTION OF EMBODIMENTS OF THE INVENTION

Generally, the principle of the present invention can be applied for level conversion of an arbitrary line signal comprising a certain number of levels. In the following the present invention will be discussed in connection with the use of a three level code, and more specifically a so-called AMI line code.

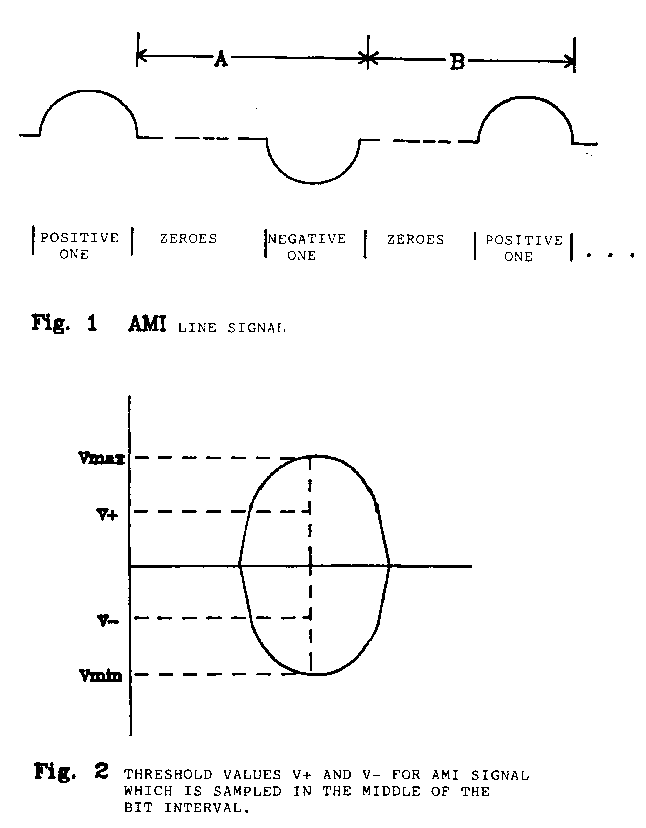

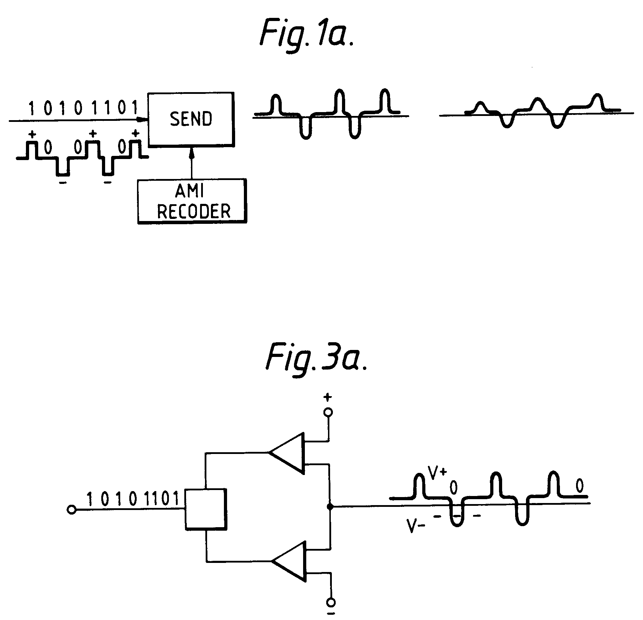

Figs. 1 and 1a illustrate how a data signal, for example the signal

10101101,

at the transmitter side is converted by means of an AMI recoder to three possible symbols for each bit interval, i.e. plus voltage, zero and minus voltage. In accordance with the properties of the AMI code the binary "0" is coded as zero volt, whereas binary "1" is alternatingly coded as plus or minus voltage, see especially Fig. 1a. Accordingly, the transmitted line signal will have a wave-form including plus and minus amplitudes, and these amplitudes will be influenced by the line lengths, noise, etc., a long line giving small amplitudes, whereas a short line involves that the signal arrives at the receiver end with a relatively large amplitude.

The application of a three level recoder implies the advantage that a larger part of the transmitted power might be concentrated at lower frequencies, compared with the use of a two level coder wherein is used only two symbols per bit interval.

The application of a three level coder, and thereby three symbols per bit interval, will however involve an increased complexity of the decoder at the receiver end, since a comparison in relation to a fixed reference can no longer take place.

As appearing from Fig. 2 it is possible in principle to have two threshold values, i.e. V+ and V-, to compare in relation to, for thereby deciding whether the received signal is positive, negative or zero. Because these threshold values are dependent on the level of the received signal, which in turn is dependent upon the cable length, the threshold values must be adjusted at the receiver end. This involves a complicated condition compared to two level codes, wherein comparison is always made in relation to zero volt. The adjustment of a received signal and the threshold values of a multiple level code is usually made adaptive, for example by using AGC (Automatic Gain Control), such that the level of the received signal is adjusted to fixed detection thresholds. The use of AGC at the receiver end entails complicating level regulation, and does so to a substantial degree in connection with two wire echo cancellation.

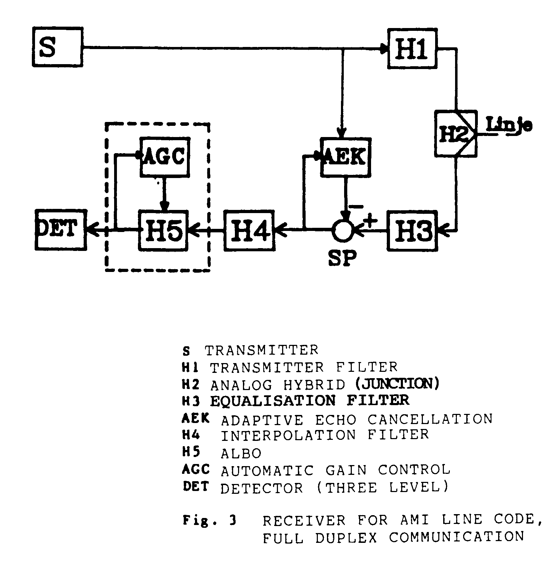

In Fig. 3 and Fig. 3a there is illustrated a typical receiver for AMI line code, wherein prior art is implemented. Fig. 3 illustrates a receiver for full duplex connection. In order to remove a signal from own transmitter S which lets through signals to own receiver, a so-called echo, the receiver is equipped with an adaptive echo cancellation AEK. At discrete point samples of received signal the AEK will compensate for possible echo which is let through the analog hybrid or junction H2 and an equalizing filter H3. A filter H4 inter-polates between certain point samples and forms the input signal to an adaptive filter H5, which is a so-called ALBO (Automatic Line Build Out). To the filter H5 there is also connected circuits for level regulation AGC, for thereby on the input to a detector DET, which is a three level detector, obtaining a substantially equal signal level, independent of line type and line length.

As regards the adaptive echo cancellation AEK, this might be implemented in a plurality of manners, but in the following the patented principle according to GB-A-2007946 will be discussed briefly, this principle also being of significance in connection with appropriate embodiments of the present invention.

The echo in the receiver which originates from a given data bit from own sender S, will fade out as a function of time. Consequently, only a definite number of the last transmitted data bits will in practice

EP 0 291 246 B1

determine the echo. The smallest number of data bits from own sender S, which must be included to render an approximately unambiguous representation of echo, will vary with inter alia the degree of adjustment in the analog hybrid, typically less than ten bits.

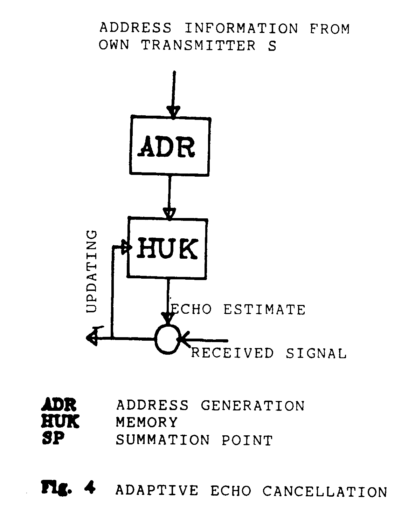

According to the patented echo cancellation principle disclosed in GB-A-2007946 this unambiguous relation between echo and a definite previous history is utilized, since data from own sender S constitutes the address of a memory HUK comprising an estimate of the echo for this special previous history. This principle is illustrated in Fig. 4, wherein address information from own sender S is transferred to an address generating unit ADR, which is a detector detecting the variant in question of the time course from said sender S, and generates that memory address in the memory HUK, wherein the organized value of the variant in question, of the signal transmitted from the transmitter S, is stored.

When a specific address is used it will also be updated. The updating is dependent upon the value of the difference between received signal in the receiver and the echo estimate coming from the memory HUK. Due to this updating the contents of the memory of the given address will converge towards an expected value of the signal on the input to the cancellation circuit at the points of time when the address contents are used. If the remote end signal and the echo are not correlated, this will in practice involve a value equal to echo.

Without being a limitation to the principle of the present invention, this has found special application in connection with such an adaptive echo cancellator, for adaptively to convert a received three level AMI signal to a two level detection criterion, which consequently renders the circuitry advantages included in a two level line code.

As appearing from Fig. 1 and 1a an AMI signal area from a terminated positive one including the first occurrence of a negative one, i.e. the area A in Fig. 1, will have a negative direct voltage component or an average value. The actual value will be dependent upon the number of intermediate zeroes. Quite correspondingly, the area from a terminated negative one including the first occurrence of a subsequent positive one, i.e. the area B in Fig. 1, will have a positive expected value.

Consequently, it follows that a cancellation circuit which is updated only in one of the areas, will converge towards a value which is equal to the desired threshold value in the area in question.

In connection with independent data bits the possibility P(n) for having between two ones a sequence of n zeroes, will be given by the expression:

$$P(n) = (1/2)^{n+1} \quad n \geq 0$$

If the choice of address in the adaptive cancellation circuit should not be determined only by the previous-history of own transmitted signal, but also by the polarity of the next AMI one pulse, then the contents of the memory will converge towards a value which is equal to the sum of echo and the threshold values V+ or V- for the AMI signal in this area. The cancellation circuit will therefore automatically centre the signal around the correct threshold value, V+ or V-.

The signal on the output from the cancellation circuit thereby becomes a pure two level signal including the circuitry advantages included therein. Subsequent comparison takes place in relation to the reference voltage zero volt, and the comparison circuit can be common for several point samples within the bit interval.

The relationship between the polarity on the output of the cancellation circuit, the address area and the received AMI signal will be as illustrated in the following table:

Table 1

| AMI-signal | Area A | Area B |
|---|---|---|
| 1 | neg. | pos. |
| 0 | pos. | neg. |

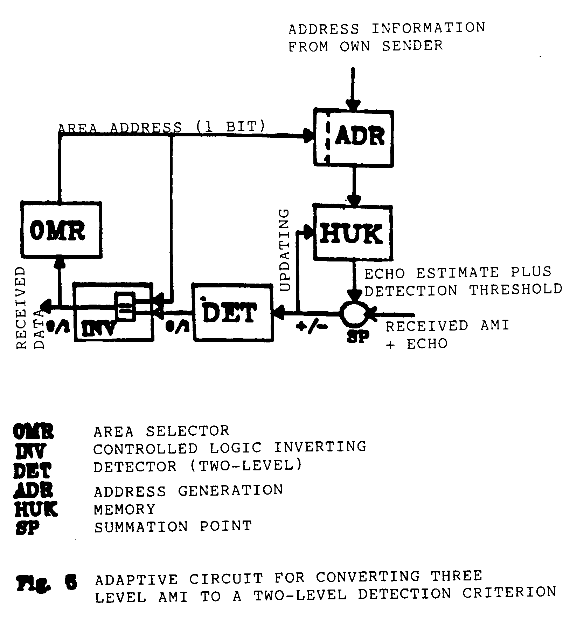

As appearing from the above table 1, the interpretation of positive or negative signal on the output from the cancellation circuit will be different for the address areas A and B. For a given address area the signal on the output from the cancellation circuit must therefore be inverted for presenting an unambiguous connection between this signal and the received AMI signal. In an embodiment of the present invention this will therefore also be included a unit which effects the correct interpretation of the signal on the output from the cancellation circuit, for example as depicted by the special embodiment according to Fig. 5.

5

In Fig. 5 there are illustrated the same elements as in Fig. 4, but in addition there is included a detector DET which is connected direct to the output from the echo cancellation circuit, given by the summation point SP. This detector DET is according to the invention a two level detector which senses the incoming three level AMI basis band code according to a two level detection criterion.

Further, there is illustrated in Fig. 5 an area selector OMR which changes address upon each detected one. The address area A or B is thereby selected synchronously with the polarity of the AMI one pulse.

The chosen address is fed back to a controlled inverter INV, so that the output signal from the detector DET is interpreted correctly in the chosen address area, in accordance with what has been disclosed above.

In order to increase the quality of the detection the prior art allows for letting the previously received signal be included in the detection process for the next bit, so-called quantified feed-back, QF/DFE. Due to the final band width of the transmission channel there will occur an influence between neighbouring bits (inter symbol interference). The knowledge of what has been received previously, therefore renders information about symbol interference of the next data bit, and this information can be used for increasing the safety of the detection by compensating for the known portion of the symbol interference.

The present invention can also advantageously be combined with quantified feed-back. Normally, quantified feed-back requires 1 bit information per received data bit for which a compensation is desired. By compensation within the areas A or B, according to the present invention, one can possibly take advantage of the condition that the received data sequence is unambiguously given by the length of the area. Consequently, only a code including a length $\log_2(n)$ bits is required for describing the previous-history within an area having a duration up to n bits. A three bit code which can normally be used for compensation of three received data bits might for example cover an area having a duration up to eight bits.

The compensation within the area takes place by determining the address choice in the cancellation circuit not only on the basis of the polarity of the next AMI one pulse, but also on the basis of the number of data bits occurring since the previous logic one. This solution will in principle only differ from the solution illustrated in Fig. 5 by the fact that the area selector OMR delivers a multi-bit address instead of a single bit. OMR must then comprise counting circuits for the registration of the number of bits subsequent to the last detected one. If a compensation for the received data bits outside the area is also desired (this might especially be required at the start of the area), then this information will represent an addition.

## Claims

1. Method for converting an AMI base band code as re-coded line signal, comprising a certain number of levels to a signal comprising fewer levels, characterized in that there is used a memory-type echo cancellation circuit (ADR, HUK), as an adaptive circuit which automatically determines the detection threshold for a received AMI signal, the address selection in the cancellation circuit (ADR, HUK) being partially determined by the polarity of the last received AMI one pulse.

2. Method as claimed in claim 1, characterized in that on the output from a two level detector (DET) there is effected a controlled inverting (INV), such that received data are inverted in one of the two address areas (A, B) given by the AMI code, that the output from the inverter (INV) is connected to an area selector (OMR) which submits a partial address to the memory (HUK) of the echo cancellation circuit, and that the address selection alternates in pace with the presence of logic ones in the received data.

3. Method as claimed in claim 1 or 2, characterized in that from the area selector (OMR) there is submitted a multibit address to the memory (HUK) of the echo cancellation circuit (ADR, HUK), said address being determined by the occurrence of ones in the received data, said address additionally comprising information about the number of detections since the last one detection, as well as possible information about the received bit pattern.

4. A device for converting an AMI base band code, as re-coded line signal comprising a certain number of levels, to a signal comprising fewer levels, characterized in that it comprises a memory-type echo cancellation circuit (ADR, HUK), an adaptive circuit which automatically determines the detection threshold for a received AMI signal, the address selection in the echo cancellation circuit (ADR, HUK) being partially determined by the polarity of the last received AMI one pulse.

5. A device as claimed in claim 4, characterized in that the device comprises a two level detector (DET) which is connected to the output from the echo cancellation circuit (ADR, HUK) which converts received data in one of the two address area (A, B) which is given by the AMI code; and in that the output from the inverter (INV) is connected to an area selector (OMR) which submits a partial address to the memory (HUK) of the echo cancellation circuit, the address selection alternating in pace with the occurrence of logic ones in the received data.

6. Device as claimed in claim 5 or 6, characterized in that the area selector (OMR) is provided for delivering a multi-bit address to the memory (HUK) of the echo cancellation circuit, said address being determined by the occurrence of ones in the received data, said address additionally comprising information about the number of detections since last detection of a "one", and optionally information about the received bit pattern.

## Patentansprüche

1. Verfahren zum Umwandeln eines AMI-Basisbandcodes als rekodiertes Leitungssignal, das eine bestimmte Anzahl von Pegeln umfaßt, in ein Signal, das weniger Pegel umfaßt, **dadurch gekennzeichnet,** daß eine Speicher-Echounterdrückungsschaltung (ADR, HUK) als eine adaptive Schaltung eingesetzt wird, die automatisch den Erfassungsschwellenwert für ein empfangenes AMI-Signal bestimmt, wobei die Adressenauswahl in der Unterdrückungsschaltung (ADR, HUK) teilweise durch die Polarität des letzten empfangenen AMI-Eins-Impulses bestimmt wird.

2. Verfahren nach Anspruch 1, **dadurch gekennzeichnet,** daß der Ausgang eines 2-Pegel-Detektors (DET) einer gesteuerten Invertierung (INF) unterzogen wird, so daß empfangene Daten in einem der beiden Adressenbereiche (A, B), der durch den AMI-Code vorgegeben ist, invertiert werden, daß der Ausgang des Inverters (INV) mit einem Bereichsselektor (OMR) verbunden ist, der dem Speicher (HUK) der Echounterdrückungsschaltung eine Teiladresse zuführt, und daß die Adressenauswahl zusammen mit dem Vorhandensein von logischen Einsen in den empfangenen Daten wechselt.

3. Verfahren nach Anspruch 1 oder 2, **dadurch gekennzeichnet,** daß von dem Bereichsselektor (OMR) dem Speicher (HUK) der Echounterdrückungsschaltung (ADR, HUK) eine Mehrfachbit-Adresse zugeführt wird, wobei die Adresse durch das Auftreten von Einsen in den empfangenen Daten bestimmt wird, wobei die Adresse darüber hinaus Informationen über die Anzahl von Erfassungen seit der letzten Erfassung sowie mögliche Informationen über das empfangene Bit-Muster umfaßt.

4. Vorrichtung zum Umwandeln eines AMI-Basisbandcodes als rekodiertes Leitungssignal, das eine bestimmte Anzahl von Pegeln umfaßt, in ein Signal, das weniger Pegel umfaßt, **dadurch gekennzeichnet,** daß sie eine Speicher-Echounterdrückungsschaltung (ADR, HUK) umfaßt, eine adaptive Schaltung, die automatisch den Erfassungsschwellenwert für ein empfangenes AMI-Signal bestimmt, wobei die Adressenauswahl in der Echounterdrückungsschaltung (ADR, HUK) teilweise durch die Polarität des letzten empfangenen AMI-Eins-Impulses bestimmt wird.

5. Vorrichtung nach Anspruch 4, **dadurch gekennzeichnet,** daß die Vorrichtung einen 2-Pegel-Detektor (DET) umfaßt, der mit dem Ausgang der Echounterdrückungsschaltung (ADR, HUK) verbunden ist, der empfangene Daten in einem der beiden Adressenbereiche (A, B) umwandelt, der durch den AMI-Code vorgegeben ist; und dadurch, daß der Ausgang des Inverters (INV) mit einem Bereichsselektor (OMR) verbunden ist, der dem Speicher (HUK) der Echounterdrückungsschaltung eine Teiladresse zuführt, wobei die Adressenauswahl zusammen mit dem Auftreten von logischen Einsen in den empfangenen Daten wechselt.

6. Vorrichtung nach Anspruch 5 oder 6, **dadurch gekennzeichnet**, daß der Bereichsselektor (OMR) dem Speicher (HUK) der Echounterdrückungsschaltung eine Mehrfachbit-Adresse zuführt, wobei die Adresse durch das Auftreten von Einsen in den empfangenen Daten bestimmt wird, wobei die Adresse darüber hinaus Informationen über die Anzahl von Erfassungen seit der letzten Erfassung einer "Eins" sowie wahlweise Information über das empfangene Bit-Muster umfaßt.

## Revendications

1. Procédé pour convertir un code AMI de bande de base constituant un signal de ligne recodé, comportant un certain nombre de niveaux, en un signal comportant moins de niveaux, caractérisé en ce qu'on utilise un circuit (ADR, HUK) d'annulation d'écho, de type mémoire, constituant un circuit adaptatif qui détermine automatiquement le seuil de détection pour un signal AMI reçu, la sélection d'adresse dans le circuit d'annulation (ADR, HUK) étant partiellement déterminée par la polarité de la dernière impulsion AMI de un reçue.

2. Procédé selon la revendication 1, caractérisé en ce qu'on effectue une inversion commandée (INV) sur la sortie d'un détecteur (DET) à deux niveaux de façon que les données reçues soient inversées dans une des deux zones (A, B) d'adresses données par le code AMI, en ce que la sortie de l'inverseur (INV) est reliée à un sélecteur (OMR) de zone qui applique une adresse partielle à la mémoire (HUK) du circuit d'annulation d'écho, et en ce que la sélection d'adresse alterne avec la présence de uns logiques dans les données reçues.

3. Procédé selon la revendication 1 ou 2, caractérisé en ce qu'on applique, depuis le sélecteur (OMR) de zone, une adresse multi-bit à la mémoire (HUK) du circuit (ADR, HUK) d'annulation d'écho, ladite adresse étant déterminée par la présence de uns dans les données reçues, ladite adresse comportant en outre des informations sur le nombre de détections depuis la dernière détection d'un un, ainsi que des informations éventuelles sur l'arrangement binaire reçu.

4. Dispositif pour convertir un code AMI de bande de base constituant un signal de ligne recodé, comportant un certain nombre de niveaux, en un signal comportant moins de niveaux, caractérisé en ce qu'il comporte un circuit (ADR, HUK) d'annulation d'écho, de type mémoire, un circuit adaptatif qui détermine automatiquement le seuil de détection pour un signal AMI reçu, la sélection d'adresse dans le circuit (ADR, HUK) d'annulation d'écho étant partiellement déterminée par la polarité de la dernière impulsion AMI de un reçue.

5. Dispositif selon la revendication 4, caractérisé en ce que le dispositif comporte un détecteur (DET) à deux niveaux qui est relié à la sortie du circuit (ADR, HUK) d'annulation d'écho qui convertit les données reçues dans l'une des deux zones (A, B) d'adresses données par le code AMI; et en ce que la sortie de l'inverseur (INV) est reliée à un sélecteur (OMR) de zone qui applique une adresse partielle à la mémoire (HUK) du circuit d'annulation d'écho, la sélection d'adresse alternant avec la présence de uns logiques dans les données reçues.

6. Dispositif selon la revendication 5 ou 6, caractérisé en ce que le sélecteur (OMR) de zone sert à fournir une adresse multi-bit à la mémoire (HUK) du circuit d'annulation d'écho, ladite adresse étant déterminée par la présence de uns dans les données reçues, ladite adresse comportant en outre des informations sur le nombre de détections depuis la dernière détection d'un "un", et éventuellement des informations sur l'agencement binaire reçu.

| | POSITIVE<br>ONE | | ZEROES | | NEGATIVE<br>ONE | | ZEROES | | POSITIVE<br>ONE | | . . . |

**Fig. 1** AMI LINE SIGNAL

**Fig. 2** THRESHOLD VALUES V+ AND V− FOR AMI SIGNAL
WHICH IS SAMPLED IN THE MIDDLE OF THE
BIT INTERVAL.

## Fig.1a.

10101101

SEND

AMI
RECODER

$\overset{+}{\sqcap}0$ $\;0\overset{+}{\sqcap}\;$ $0\overset{+}{\sqcap}$

## Fig.3a.

+

10101101

V+  0        0

V-  -   -

-

EP 0 291 246 B1

S   TRANSMITTER
H1  TRANSMITTER FILTER
H2  ANALOG HYBRID (JUNCTION)
H3  EQUALISATION FILTER
AEK ADAPTIVE ECHO CANCELLATION
H4  INTERPOLATION FILTER
H5  ALBO
AGC AUTOMATIC GAIN CONTROL
DET DETECTOR (THREE LEVEL)

Fig. 3   RECEIVER FOR AMI LINE CODE,
         FULL DUPLEX COMMUNICATION

11

ADDRESS INFORMATION FROM
OWN TRANSMITTER S

ADR

HUK

UPDATING

ECHO ESTIMATE

RECEIVED SIGNAL

ADR  ADDRESS GENERATION
HUK  MEMORY
SP   SUMMATION POINT

Fig. 4 ADAPTIVE ECHO CANCELLATION

ADDRESS INFORMATION
FROM OWN SENDER

AREA ADDRESS (1 BIT)

**ADR**

**OMR**

UPDATING

**HUK**

ECHO ESTIMATE PLUS
DETECTION THRESHOLD

RECEIVED
DATA

**INV**

**DET**

+/-

**SP**

RECEIVED AMI
+ ECHO

| | |
|---|---|
| **OMR** | AREA SELECTOR |
| **INV** | CONTROLLED LOGIC INVERTING |
| **DET** | DETECTOR (TWO-LEVEL) |
| **ADR** | ADDRESS GENERATION |
| **HUK** | MEMORY |
| **SP** | SUMMATION POINT |

**Fig. 5** ADAPTIVE CIRCUIT FOR CONVERTING THREE
LEVEL AMI TO A TWO-LEVEL DETECTION CRITERION